# EUROPEAN PATENT APPLICATION

(11) **EP 4 714 916 A1**
(43) Date of publication of application: **25.03.2026**
(21) Application number: 24810050.5
(22) Date of filing: 02.04.2024
(51) Int. Cl.: C03C 11/00, C03B 19/06, A24F 40/70

(54) **POROUS GLASS WITH MULTI-DIRECTIONAL COMMUNICATING PORES, AND ATOMIZING CORE AND ELECTRONIC ATOMIZER**

(30) Priority: 19.05.2023 CN 202310575203
(71) Applicant: Smoore International Holdings Limited, Grand Cayman, KY1-1111 (KY)
(72) Inventor: YANG, Congming, Shenzhen, Guangdong 518102 (CN); LONG, Jicai, Shenzhen, Guangdong 518102 (CN); ZHOU, Qianyuan, Shenzhen, Guangdong 518102 (CN); FU, Lei, Shenzhen, Guangdong 518102 (CN); SU, Yuanan, Shenzhen, Guangdong 518102 (CN); ZHOU, Hongming, Shenzhen, Guangdong 518102 (CN)
(74) Representative: Winter, Brandl - Partnerschaft mbB
(86) International application number: PCT/CN2024/085461
(87) International publication number: WO 2024/239802

(57) **Abstract**

This application relates to the technical field of porous materials, and in particular to a porous glass with multi-directional communication pores, an atomization core, and an electronic atomizer. The porous glass with multi-directional communication pores provided in this application includes a skeleton and multi-directional communication pores, where the multi-directional communication pore is a spherical pore and in communication with at least 6 pores around the multi-directional communicating pore. By defining the structure of the communication pore, this application enables an atomization liquid substrate such as an e-liquid to have a fast transmission speed and small differences in transmission paths. Multi-channel communication mitigates the problem of insufficient local e-liquid supply or unbalanced e-liquid supply in the atomization core, improves the local coking phenomenon during the vaping process, and enhances the taste and vaping experience of e-cigarettes.

## Description

### CROSS-REFERENCE TO RELATED APPLICATIONS

This application claims the priority to the Chinese Patent Application No. 202310575203.2, filed with China National Intellectual Property Administration on May 19, 2023 and entitled "POROUS GLASS WITH MULTI-DIRECTIONAL COMMUNICATION PORES, ATOMIZATION CORE AND ELECTRONIC ATOMIZER", which is incorporated herein by reference in its entirety.

### TECHNICAL FIELD

This application relates to the technical field of porous materials, and in particular to a porous glass with multi-directional communication pores, an atomization core, and an electronic atomizer.

### BACKGROUND

An electronic atomizer is a product that transforms a substrate for atomization and the like into vapor through means like atomization for user inhalation. An atomization core is the core component of the electronic atomizer and plays a critical role in the performance of the electronic atomizer, such as taste and aerosol amount, etc.

Most closed electronic atomizers use porous ceramics as the atomization cores, most of which are prepared with raw materials such as diatomite, silicon oxide, aluminum oxide, etc., with the addition of glass powder, pore-forming agents, etc., and sintering to produce porous ceramics by particle accumulation. Using porous ceramics as the atomization cores features good uniformity, a long service life, a delicate taste, and a high degree of mechanization. However, a heating element of porous ceramics features a certain proportion of semi-closed pores and fine pores, which can easily lead to the absorption of low-viscosity components in the substrate for atomization, thereby affecting the vaping taste and flavor restoration. Meanwhile, the microscopic surface of the heating element of porous ceramics is rough and has low continuity, making them incompatible with thin-film heating films.

Compared with the porous ceramics, porous glass features a smooth and continuous microscopic structure and a low proportion of micro-nano pores, less prone to adsorb the substrate for atomization, etc. This, to some extent, enhances the taste and flavor restoration of the electronic atomizer. However, the pore structure of the porous glass in the prior art is nonuniform and the pore communication is poor. This results in significant differences in the path lengths through which an atomization liquid substrate (e.g., an e-liquid) passes. In particular, the presence of one-way communicated open pores included in porous materials hinders the transmission speed of the atomization liquid substrate (the e-liquid), resulting in significant differences in the transmission speeds of the atomization liquid substrate. In areas where the transmission speed of the atomization liquid substrate is slow, insufficient e-liquid supply phenomenon is prone to occur during the atomization process, causing local coking and carbon deposition, severely impacting customers' vaping experience. In addition, the cumulative effect of the carbon deposition will also accelerate the failure of the atomization core.

### SUMMARY

Therefore, the technical problem to be solved by this application is to overcome the defects in the prior art, such as nonuniform pore structure structures, poor communication, and susceptibility to carbon deposition in porous glass pores, thereby providing a porous glass with multi-directional communication pores, an atomization core and an electronic atomizer.

For this purpose, this application provides the following technical solutions:
Provided in the application is a porous glass with multi-directional communication pores, including a skeleton and multi-directional communication pores, where the multi-directional communication pore is a spherical pore and in communication with at least 6 pores around the multi-directional communicating pore.

Optionally, the multi-directional communication pore is in communication with 6 to 12 pores around the multi-directional communicating pore;
optionally, the multi-directional communication pore is in communication with 7 to 10 pores around the multi-directional communicating pore.

Optionally, the skeleton includes a fiber skeleton that forms a scaffold structure and a glass covering and bonding layer that provides binding and stabilization, and the total volume percentage of the skeleton is 25% to 35%;
where the glass covering and bonding layer includes glass powder and remaining fiber particle components that did not form the fiber skeleton.

Optionally, the length of the fiber skeleton is 75 to 150 micrometers, and the diameter of the fiber skeleton is 15 to 45 micrometers;
optionally, the weight percentage of the fiber skeleton in the porous glass with multi-directional communication pores ranges from 12% to 45%;
optionally, the weight percentage of the glass covering and bonding layer in the porous glass with multi-directional communication pores ranges from 55% to 88%.

Optionally, the porosity of the porous glass is 65% to 75%;
optionally, the porosity is 70% to 75%.

Optionally, the pore size of the multi-directional communication pore is 70 to 80 micrometers, the average diameter of pore throats of communication channels between pores is 25 to 45 micrometers, and the pore throats are distributed in a range of 5 to 60 micrometers, where 50% or more of the pore throats are distributed in a range of 20 to 45 micrometers.

Optionally, the average diameter of the pore throats is 28 to 36 micrometers, the pore throats are distributed in a range of 10 to 55 micrometers, and 90% or more of the pore throats are distributed in a range of 20 to 45 micrometers.

Optionally, the average diameter of the pore throats is about 29 to 35 micrometers, the pore throats are distributed in a range of 12 to 50 micrometers, and the percentage of the pore throats distributed in a range of 20 to 45 micrometers is higher than 95%;
optionally, the pore throats are all distributed in a range of 20 to 45 micrometers.

This application further provides an atomization core which uses the aforementioned porous glass with multi-directional communication pores as a substrate, where a heating unit is provided on the substrate.

Optionally, a temperature field deviation of the atomization core is less than 10°C during an atomization process.

This application further provides an electronic atomizer including the aforementioned atomization core.

Generally, for a rectangular flat-plate type atomizer, for example, 4 × 9 mm, 7 × 3.5 mm, or the like, the porous glass substrate has a thickness of 1 to 3 mm, optionally, a thickness of 1.2 to 2.5 mm.

Generally, based on the actual human vaping process, the e-cigarette vaping time is set to be 3 s during testing of e-cigarette vaping. For a porous substrate of an e-cigarette atomization core, the e-liquid is transmitted from the e-liquid inlet surface to the atomization surface through channels in the porous substrate, and when the time difference for the e-liquid to pass through individual e-liquid supply channels exceeds 3 s, an insufficient local e-liquid supply phenomenon will occur. For a certain heating element, assuming that a transmission speed for a certain substrate for atomization such as an e-liquid to pass is V, the path difference caused by a time difference of 3 s is 3V. Therefore, for substrate materials of different thicknesses (L), the allowable content of non-communicated pores in each channel of the substrate occupies approximately 3V/L.

For example, for a substrate with an e-liquid conduction velocity of 0.12 mm/s, when the thickness of the substrate is 1.2 mm, the allowable content of non-communicated pores in each channel of the substrate should be less than 30%, that is, the proportion of multi-directional communication pores is at least 70%; when the thickness is 2 mm, the allowable content of non-communicated pores in each channel of the substrate should be less than 18%, that is, the proportion of multi-directional communication pores is at least 82%; and when the thickness is 2.5 mm, the allowable content of non-communicated pores in each channel of the substrate should be less than 14.4%, that is, the proportion of multi-directional communication pores is at least 85.6%. Theoretically, in an optimal example, the proportion of multi-directional communication pores reaches 100%. In this way, the structural uniformity of the heating element is the highest, and the structural stability and the e-liquid conduction performance are more desirable.

Generally, for an atomization liquid substrate such as an e-liquid with a lower viscosity, the conduction velocity of the liquid substrate in the porous substrate is faster. Correspondingly, the proportion of the multi-directional communication pores may reach a smaller value, such as 65%.

The porous glass with multi-directional communication pores provided in this application is obtained by molding and preparing from glass, fiber materials, and pore-forming agent powders.

Generally, for the five close packing modes of equal-diameter spheres: a simple cubic close packing with a coordination number of 6 and a packing density of 52.4%; an orthogonal close packing with a coordination number of 8 and a packing density of 60.5%; a tetragonal close packing with a coordination number of 10 and a packing density of 69.8%; a face-centered cubic close packing and a hexagonal close packing with a coordination number of 12 a packing density of 74.2%. To obtain the porous glass material constructed with the multi-directional communication pores, the pore-forming agents are designed to be added according to the volume ratio of close packing, that is, the volume of pore-forming agents accounts for 60% to 75% of the total material volume, optionally, the volume of pore-forming agents accounts for 70% to 75% of the total volume.

In the application, glass powder serves the role of skeleton bonding. Fine glass powder can be uniformly dispersed through the system, enabling the pores of the porous glass after sintering to be more uniformly distributed with good connectivity. In addition, the fine glass powder can shorten the sintering time and reduce glass flow at a high temperature, increasing the uniformity of the overall material while improving efficiency. In the application, fiber components serve the role of skeleton support. For preparing the porous material with a pore size of 70 to 80 micrometers and a pore throat of 30 to 40 micrometers, the fiber skeleton providing support function can optionally be 70 to 150 micrometers. Generally, small-sized fibers or ceramic particles do not affect the overall scaffold structure. After sintering, the small-sized fibers or ceramic particles are wrapped by the glass powder and then aggregate at the fiber bonding sites (in the gaps of pore-forming agent), forming support endpoints.

The porous glass includes a skeleton and multi-directional communication pores, where the skeleton includes a fiber skeleton that forms a scaffold structure and a glass covering and bonding layer that provides binding and stabilization. The length of the fiber skeleton is 70 to 150 micrometers, the diameter of the skeleton is 15 to 45 micrometers and the weight percentage ranges from 12% to 45%. The fiber skeleton material is a high-temperature resistant ceramic fiber material, including alumina, mullite, zirconia, etc. The diameter of the fiber is 10 to 40 micrometers and the length is 10 to 150 micrometers, where the length of effective fiber that forms a scaffold structure is 70 to 150 micrometers. The glass covering and bonding layer includes glass material and fibers or ceramic powder that does not form a scaffold structure, and the weight percentage of the glass covering and bonding layer ranges from 55% to 88%.

Optionally, a method for preparing the porous glass material generally includes steps of mixing glass powder, fiber components, and pore-forming agents, preparing a green compact, and undergoing steps such as debinding and sintering.

Optionally, the diameter of the fiber components is 3 to 30 µm, and the length is 20 to 500 µm; and optionally, the diameter of the fiber components is 10 to 25 micrometers and the length is 20 to 150 micrometers.

Optionally, the length-to-diameter ratio of the fiber components is 1 to 10, optionally, the length-to-diameter ratio of a fiber with a length of 50 to 150 µm is 2 to 5;
and/or, within the fiber components, the proportion of fibers with a fiber length of 50 µm or above is 25%, optionally, the proportion is 40% or more, and further optionally, the proportion is 40% to 100%.

Based on the total mass of the glass powder and the fiber components, the glass powder accounts for 40% to 62%, and the fiber components account for 38% to 60%;
and/or the amount of the pore-forming agents used is 0.3 to 2.5 times of the total mass of the glass powder and the fiber components.

Any one of a casting process, an injection molding process, a dry pressing process, and a gel casting process is selected to prepare a green compact;
the foregoing processes for preparing the green compact are all known in the art, and corresponding processing aids may be added and used based on the different processes selected. Typically, but without limitation, the steps of the injection molding process are roughly as follows: blended materials are internal mixed at a high temperature with injection molding additives (paraffin, polyethylene and dispersants, etc.) in an internal mixer to a uniform status, and then prepared through injection molding into a green compact of a specified shape.

And/or, the debinding temperature is 200°C to 800°C, and the debinding time is 5 to 50 h; optionally, the debinding temperature is 200°C to 350°C.

And/or, the sintering temperature is 900°C to 1250°C or 1180°C to 1320°C, and the sintering time is 10 to 180 mins.

Optionally, the method for preparing a porous glass satisfies at least one of the following (1) to (5):
(1) The softening temperature of the glass powder is from 600°C to 1200°C, and a selected fiber raw material needs to have a softening point equal to or higher than the sintering temperature in the preparing method to serve as a skeleton;
(2) The particle size of the glass powder is 10 µm or below, and optionally, the particle size is 3000 mesh or below;
(3) The fiber components are at least one of silicon carbide fibers, silicon nitride fibers, aluminum silicate fibers, quartz fibers, mullite fibers, alumina fibers, hydroxyapatite fibers, or zirconia fibers;
(4) The pore-forming agent material is one or a mixture of materials that can decompose, volatilize or burn at high temperatures, such as carbon powder, polystyrene, polymethyl methacrylate, polylactic acid, polyvinyl alcohol, polyethylene terephthalate, engineering plastics, starch, cellulose, sawdust, graphite powder, etc.;
(5) The particle size of the pore-forming agents is 10 to 300 µm. Optionally, the average particle size of the pore-forming agents is 80 micrometers. The addition proportion of pore-forming agents with different diameters may be obtained to obtain porous glass material with better connectivity.

To obtain the porous glass with said special pore structure, the following pre-treatments are done on glass raw material and fiber materials:
(1) The particle size of the raw material of the glass powder is less than 10 micrometers, and glass powder of 3000 mesh or below may optionally be used. To obtain glass powder with a uniform particle size, commercially available glass powder may be ball-milled using ethanol as the solvent in a high-energy planetary ball mill at a rotation speed of 200 to 500 r/min for 3 to 5 hours, then dried, sieved, and used.
(2) Fibers, such as mullite fibers, zirconia fibers, or alumina fibers, which are high-temperature resistant, may be used. This application optionally uses mullite fibers with a fiber diameter of 10 to 25 micrometers, a fiber length of less than 100 micrometers and a fiber length-to-diameter ratio of 1 to 10. Generally, commercially available 2-5mm short-cut fibers are initially crushed to 0.5 mm or below through a crusher, then high-energy planetary ball-milled with ethanol as the solvent and stearic acid as a grinding aid for 2 to 8 hours at a ball-milling rotation speed of 100 to 400 r/min; optionally, ball-milled at 300 r/min for 6 hours. The ball-milled fibers are rinsed with ethanol, dried and sieved through a 100-mesh sieve to obtain target fibers.

Optionally, the present porous glass with multi-directional communication pores is prepared by using the injection molding process, and a method for preparing the porous glass is as follows:
Glass, fibers, and pore-forming agents are compounded according to a certain ratio, and blended for 2 hours by a three-dimensional mixer to a uniform status. The pore-forming agents are spherical pore-forming agents, and the particle size of the pore-forming agents is 10 to 300 micrometers. Optionally, the diameter of the pore-forming agents is 80 micrometers, or the diameter of the pore-forming agents is 50 micrometers. Blended materials are internal mixed at a high temperature with injection molding additives (paraffin, polyethylene and dispersants) in an internal mixer to a uniform status, and then prepared through injection molding into a green compact of a specified shape. The temperature is increased to 200°C over 200 minutes, then increased to 500°C at 0.5°C per minute, with a holding time of 2 hours set at 240°C, 280°C, 300°C, and 350°C respectively, and then the temperature is increased to 1180°C to 1320°C at 5°C per minute, held for 30 minutes, and naturally cooled to the room temperature. Generally, a better debinding process may be achieved according to the thermogravimetric curve of the pore-forming agents.

Alternatively, the porous glass with multi-directional communication pores may be obtained by direct close packing of hollow glass microspheres followed by sintering. Usually, the particle size of the selected hollow glass microspheres is 50 to 120 micrometers. Optionally, the particle size of the hollow glass microspheres is 80 to 100 micrometers. Generally, a gel casting process may be used to prepare a porous substrate. First, heat the hollow glass microspheres to 80°C, then add them to a 80°C sol liquid, stir, deaerate and inject into a mold under a pressure of 5 MPa. After cooling into a gel blank, the gel blank is dried at 50°C, and then sintered at 1000°C for 30 minutes. After naturally cooling, the porous glass substrate is obtained.

Typically, but without limitation, the atomization core provided in this application uses the porous glass as the substrate, where a heating unit is provided on the substrate. The heating unit is a heating wire, a heating mesh, or a heating film, where the heating wire or the heating mesh needs to be embedded during a green compact forming process, and then sintered together with the formed blank to obtain a porous glass atomization core. When a heating film is used, a thick-film resistive heating film may be printed by using a screen printing method on the porous glass substrate, or a thin-film resistive heating film may be applied by spraying, magnetron sputtering, design the pattern of the heating film, and then undergo the sintering step to obtain the porous glass atomization core.

Typically, but without limitation, the thick-film resistive heating film is prepared by using a screen printing process. Main components of the thick film are a nickel-based alloy, an iron-based alloy, a silver alloy, a titanium alloy, an aluminum alloy, a stainless steel, etc., including elements such as Fe, Cr, Ni, Ti, Pa, Pt, Al, Mo, Si, Ag, etc. The protruding thickness of the thick film is 11 to 100 µm, the infiltrating thickness is 10 to 100 µm, the line width is 250 to 450 µm, the line spacing is 300 µm to 900 µm, and patterns, such as S, M, Ω are used. The sintering temperature for the heating film is 700 to 1200°C, and the sintering time is 0.5 to 3 hours.

Typically, but without limitation, the thin-film resistive heating film is prepared by using spraying or magnetron sputtering. Main components of the thin film are a nickel-based alloy, a silver alloy, a titanium alloy, an aluminum alloy, a stainless steel, etc., including elements such as Fe, Cr, Ni, Ti, Pa, Pt, Al, Mo, Si, Ag, etc. The protruding thickness of the thin film is 0.5 to 5 µm.

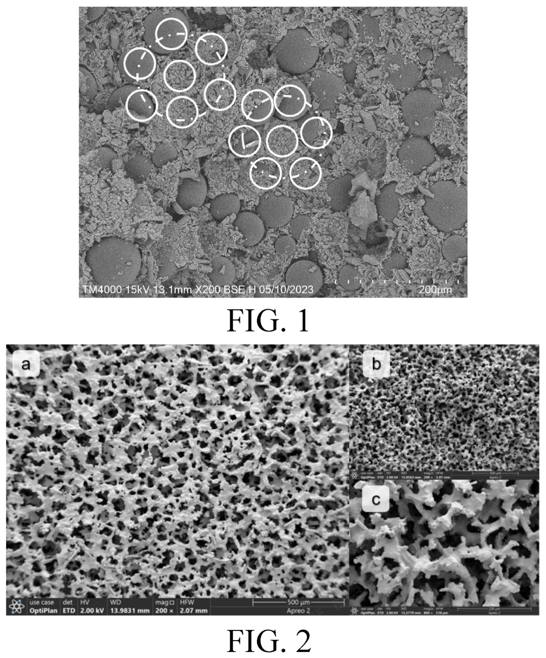

Specifically, this application further provides a porous glass atomization core prepared based on the porous glass material after film printing and sintering. The heating film of the atomization core is a porous heating film, where the porous heating film includes a part higher than a surface of a porous substrate and a part infiltrating into the porous substrate, where the part higher than the surface of the porous substrate is of a porous structure with a pore size of 5 to 30 micrometers, the pores are interconnected with each other and also connected through to the substrate pores. The film is higher than the surface of the substrate by approximately 30 to 100 micrometers, as shown in FIG. 2, optionally, the height is approximately 60 to 100 micrometers; the heating film resistance is 0.8 to 1.2 Ohms.

The technical solution of this application has the following advantages:
The porous glass with multi-directional communication pores provided in this application includes a skeleton and multi-directional communication pores, where the multi-directional communication pore is a spherical pore and in communication with at least 6 surrounding pores. By defining the structure of the communication pore, this application enables an atomization liquid substrate such as an e-liquid to have a fast transmission speed and small differences in transmission paths. Multi-channel communication mitigates the problem of insufficient local e-liquid supply or unbalanced e-liquid supply in the atomization core, improves the local coking phenomenon, and enhances the taste and vaping experience of e-cigarettes.

By defining the size of pore throats, the porous glass with multi-directional communication pores provided in this application makes the size of communication channels between pores more uniform. This can further avoid uneven liquid conduction velocity and the occurrence of local overheating during the use of the atomization core, thereby preventing local coking and carbon deposition.

### BRIEF DESCRIPTION OF THE DRAWINGS

In order to illustrate the specific embodiments of this application or the technical solutions in the prior art more clearly, the following will briefly introduce the drawings required for the description of the specific embodiments or the prior art. It is obvious that the drawings in the following description are some embodiments of this application. For those of ordinary skill in the art, other drawings can also be obtained according to these drawings without creative efforts.
FIG. 1 is a microscopic topography of a green compact obtained in Example 1 of this application;
FIG. 2 is a microscopic topography of porous glass obtained in Example 1 of this application, where a is a surface, and b and c are cross sections;
FIG. 3 is an annotation schematic diagram of the structure of multi-directional communication pores of porous glass obtained in Example 1 of this application;
FIG. 4 is a diagram of e-liquid infiltration of a porous glass substrate obtained in Example 1 and Comparative Example 2 of this application;
FIG. 5 is a macroscopic and microscopic topography of a porous heating film in a test example of this application;
FIG. 6 is a temperature field distribution and a temperature distribution diagram of Example 1 during an atomization process in a test example of this application;
FIG. 7 is a diagram of comparison between carbon deposition statuses for Example 1 (left) of this application and a commercially available ceramic heating element (right);
FIG. 8 is a temperature field distribution and a temperature distribution diagram of Example 2 during an atomization process in a test example of this application;
FIG. 9 is a temperature field distribution and a temperature distribution diagram of Comparative Example 1 during an atomization process in a test example of this application;
FIG. 10 is a microscopic topography of a green compact obtained in Example 2 of this application; and
FIG. 11 is an annotation schematic diagram of the multi-directional communication pore structure of porous glass obtained in Example 2 of this application.

### DETAILED DESCRIPTION

The following examples are provided for a better understanding of this application. They are not limited to the best embodiments, and do not constitute a limitation to the content and the scope of protection of this application. Any product identical or similar to this application obtained by anyone under the inspiration of this application or by combining this application with the features of other prior art shall fall within the scope of protection of this application.

For those examples in which specific experimental steps or conditions are not specified, the operations or conditions of the conventional experimental steps described in the documents in the art can be carried out. For those reagents or instruments for which the manufacturers are not specified, they are all conventional reagent products that can be obtained through commercially available channels.

### Example 1

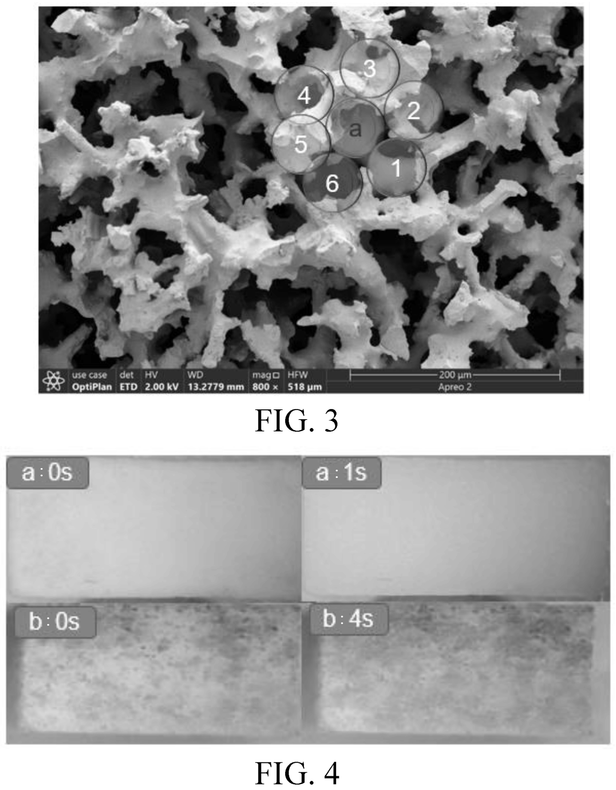

This example provides a porous glass with multi-directional communication pores, and a method for preparing the porous glass includes the following steps: using ethanol as the solvent, glass powder was ball-milled in a planetary ball mill at a rotational speed of 300 r/min for 3 hours, then dried, sieved to obtain glass powder with a particle size of less than 5 micrometers; crushed mullite short-cut fibers were planetary ball-milled with stearic acid as a grinding aid and ethanol as the solvent at a rotation speed of 300 r/min for 6 hours, and rinsed with ethanol, dried and sieved through a 100-mesh sieve to obtain fiber raw material. 13 volumes of glass powder (density 2.5 g/mL, the same below), 12 volumes of fibers (density 2.8 g/mL, the same below), and 75 volumes of PMMA (80 micrometers) pore-forming agents ingredients were compounded, and blended in a three-dimensional blender for 2 hours. The blended materials were added to an internal mixer, followed by the addition of 20% paraffin wax, 5% polyethylene, and 5% dispersion aid (dibutyl phthalate, the same below). The internal mixing was carried out at 180°C for 2 hours and then a green compact was prepared via an injection molding machine. The microscopic topography is shown in Figure 1. It can be seen from the figure that in one plane, the pore-forming agents are closely packed with 6 surrounding pore-forming agents, and the pore-forming agents show a tendency towards face-centered close packing or hexagonal close packing. The temperature was increased to 200°C over 200 minutes, then increased to 500°C at 0.5°C per minute, with a holding time of 2 hours set at 240°C, 280°C, 300°C, and 350°C respectively, and then the temperature was increased to 1180°C at 5°C per minute, held for 30 minutes, and naturally cooled to the room temperature, to obtain a porous glass material with a fiber volume content of 48%. The microscopic topography of the porous glass substrate after sintering is shown in Fig. 2 and Fig. 3. It can be seen from the figures that after the close packed pore-forming agents leave behind a pore structure after sintering. Within the same plane, the pore formed by the pore-forming agents connects with about 6 surrounding pores. The porosity of the porous substrate, tested with a Mercury intrusion method, was 72.0%, with an average pore throat of 37.7 micrometers.

A prepared porous glass substrate with a length of 9 mm, a width of 4 mm, and a height of 2.5 mm was taken, and its e-liquid conduction velocity was tested at room temperature. An e-liquid with a viscosity of 230 cP was selected. With the substrate placed vertically (9 mm in height), the time for the e-liquid to rise 9 mm was about 74.5 s, resulting in an e-liquid conduction velocity of 0.121 mm/s. Under the same conditions, a commercially available porous ceramic substrate (Shenzhen Microvapour Technology Co., Ltd., Feelm heating element) took 100 s for the e-liquid to rise 9 mm, resulting in an e-liquid conduction velocity of 0.09 mm/s. Compared with a commercially available ceramic heating element substrate, the e-liquid conduction velocity of the porous glass substrate increased by about 34%. Tested at a thickness of 2.5 mm, the time difference for the e-liquid to spread from being present to covering the entire atomization surface was 1 s. The e-liquid infiltration is shown in Figure 4a.

### Example 2

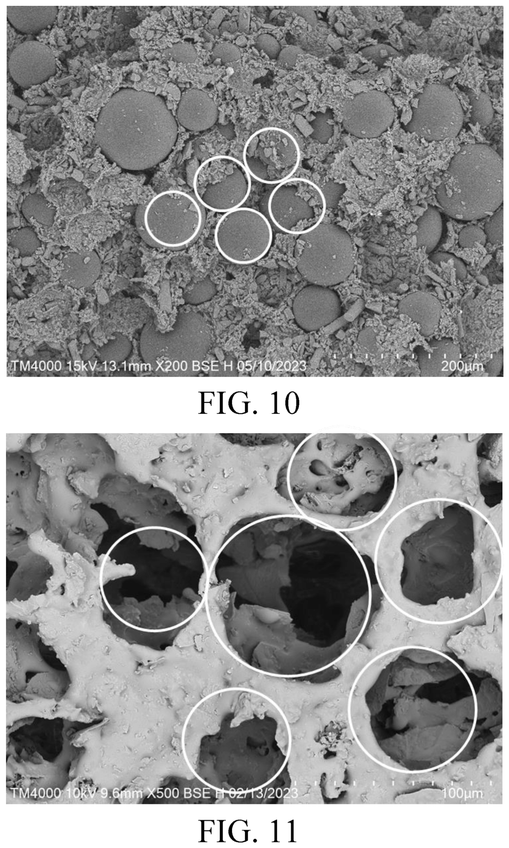

Compared with Example 1, the porous glass with multi-directional communication pores provided in this example differs in that 9 volumes of glass powder, 11 volumes of fibers, and 30 volumes of PMMA (80 micrometers) pore-forming agents were compounded. The porosity of the porous substrate, tested with a Mercury intrusion method, was 60.5%, with an average pore throat of 27.5 micrometers. The microscopic topography of the green compact is shown in FIG. 10. It can be seen from the figure that the pore-forming agents approximate a tetragonal, orthogonal, or simple cubic close-packed structure rather than a face-centered cubic or hexagonal close packing. Within the same plane, a single pore-forming agent connects with 4 surrounding pore-forming agents. The microscopic topography of the surface of the porous glass substrate is shown in FIG. 11, and the substrate pores connect with 5 surrounding pores (actually, the material is of a three-dimensional structure, and the structure of pores in other surfaces will also be connected).

With the same test method as in Example 1, the e-liquid conduction velocity was 0.114 mm/s. Tested at a thickness of 2.5 mm, the time difference for the e-liquid to spread from being present to covering the entire atomization surface was 1.5 s.

### Comparative example 1

This comparative example provides a porous glass substrate material, and a method for preparing the porous glass substrate material includes the following steps:
using ethanol as the solvent, glass powder was ball-milled in a planetary ball mill at a rotational speed of 300 r/min for 3 hours, then dried, sieved to obtain glass powder with a particle size of 3 to 5 micrometers; crushed mullite short-cut fibers were planetary ball-milled with stearic acid as a grinding aid and ethanol as the solvent at a rotation speed of 300 r/min for 6 hours, and rinsed with ethanol, dried and sieved through a 100-mesh sieve to obtain fiber raw material.28 volumes of glass powder, 14 volumes of fibers, and 58 volumes of PMMA (80 micrometers) pore-forming agents were compounded, and blended in a three-dimensional blender for 2 hours.in a three-dimensional blender for 2 hours. The blended materials were added to an internal mixer, followed by the addition of 20% paraffin wax, 5% polyethylene, and 5% dispersion aid. The internal mixing was carried out at 180°C for 2 hours and then a blank was prepared via an injection molding machine. The temperature was increased to 200°C over 200 minutes, then increased to 500°C at 0.5°C per minute, with a holding time of 2 hours set at 240°C, 280°C, 300°C, and 350°C respectively, and then the temperature was increased to 1250°C at 5°C per minute, held for 30 minutes, and naturally cooled to the room temperature, to obtain a porous glass material with a fiber volume content of 33.3%.

A rectangular sample with a size of 9 × 4 × 2. 5 mm was prepared, and the porosity of the porous substrate, tested with a Mercury intrusion method, was 57.9%, with an average pore throat of 25 micrometers. With the same test method as in Example 1, the tested e-liquid conduction velocity was 0.106 mm/s. Tested at a thickness of 2.5 mm, the time difference for the e-liquid to spread from being present to covering the entire atomization surface was 4 s. The communication pores of substrate were calculated as 82.4%. The e-liquid infiltration is shown in FIG. 4b.

### Test example

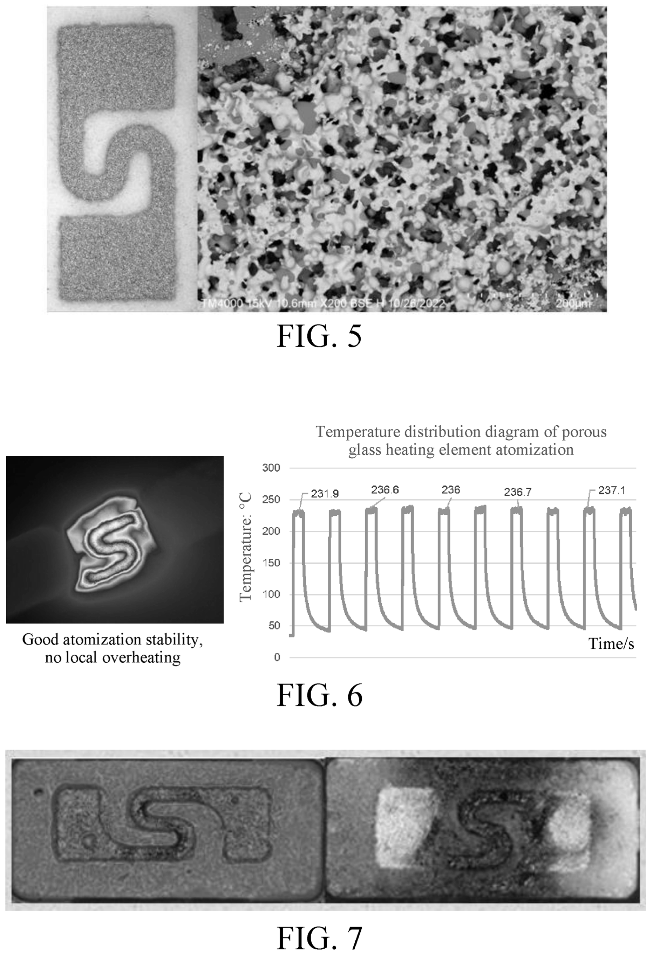

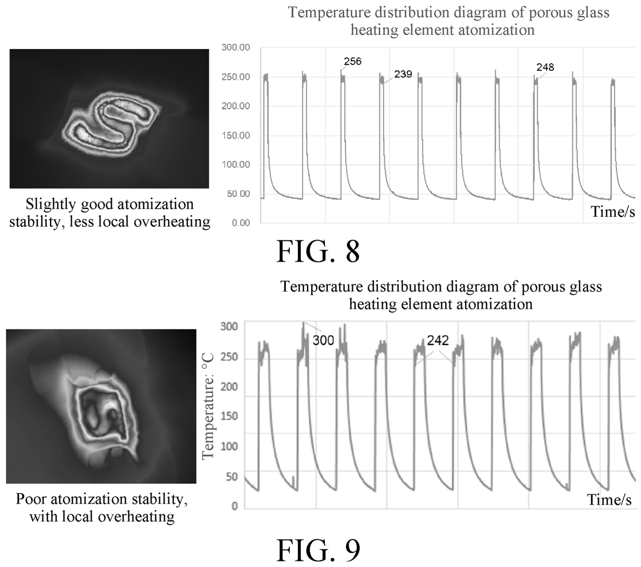

Atomization cores were prepared by using the porous glass materials prepared from the examples and the comparative examples. A porous nickel-based heating film slurry (main element Ni, including small amounts of elements, such as Si, Cr, Co, W, Mo, Al, Ag, Ru, B) was film printed and sintered to obtain a porous heating film. The pore size of the porous heating film was 5 to 30 micrometers, the pores were interconnected with each other and also connected through to the substrate pores. The film was higher than the substrate by approximately 70 micrometers, and had an infiltrating thickness of approximately 70 micrometers, as the pattern shown in FIG. 5. The line width was approximately 350 µm, the line spacing was approximately 550 µm, and the distance from the lines to the substrate edge was approximately 750 micrometers. With a sintering temperature of 1050°C, and a time of 30 minutes, a porous glass atomization core was obtained. The atomization temperature of the porous glass atomization core was investigated using an infrared thermal imager. Tested with a fruit flavored e-liquid at a 7.5 W constant power board, following a vaping process of 3 s power on and 27 s off, the porous glass atomization core during an atomization process had a uniform temperature field distribution with no local high temperature points, where the atomization temperature of Example 1 was stably distributed between 230°C and 240°C, as shown in Figure 6. The atomization temperature stability of Example 2, of which the atomization temperature was mainly distributed between 239°C and 256°C as shown in FIG. 8, was slightly lower than that of Example 1. The atomization temperature of Comparative example 1 was unstably distributed between 242°C and 300°C, as shown in FIG. 9.

The porous glass atomization cores prepared in Examples 1 and 2 and Comparative Example 1 were assembled into cigarettes for testing. Using a fruit flavored e-liquid at 7.5 W power, compared to a commercially available ceramic heating element (Shenzhen Microvapour Technology Co., Ltd., Feelm heating element), the porous glass atomization core in Example 1 was less prone to carbon deposition after puffing. As shown in Figure 7, after 400 puffs, the porous glass atomization core (left) had a significant advantage in carbon deposition compared to the ceramic heating element (right), whereas the commercially available ceramic heating element suffered from severe carbon deposition after testing 400 puffs. The carbon deposition status for Example 2 was similar to that of Example 1, and the carbon deposition status for Comparative Example 1 was close to that of the commercially available ceramic heating element. Pictures do not be shown individually.

Obviously, the above examples are merely examples for clear description and not limitations on the embodiments. For those of ordinary skill in the art, other different forms of changes or variations could be made on the basis of the above description. All embodiments need not and cannot be exhaustive herein. However, apparent changes or variations derived therefrom still fall within the scope of protection of this application.

## Claims

1. A porous glass with multi-directional communication pores, wherein the porous glass comprises a skeleton and multi-directional communication pores, wherein the multi-directional communication pore is a spherical pore and in communication with at least 6 pores around the multi-directional communicating pore.

2. The porous glass with multi-directional communication pores of claim 1, wherein the multi-directional communication pore is in communication with 6 to 12 pores around the multi-directional communicating pore.

3. The porous glass with multi-directional communication pores of claim 2, wherein the multi-directional communication pore is in communication with 7 to 10 pores around the multi-directional communicating pore.

4. The porous glass with multi-directional communication pores of claim 1, wherein the skeleton comprises a fiber skeleton that forms a scaffold structure and a glass covering and bonding layer that provides binding and stabilization, and the total volume percentage of the skeleton is 25% to 35%.

5. The porous glass with multi-directional communication pores of claim 4, wherein the length of the fiber skeleton is 75 to 150 micrometers, and the diameter of the fiber skeleton is 15 to 45 micrometers.

6. The porous glass with multi-directional communication pores of claim 4, wherein the weight percentage of the fiber skeleton in the porous glass with multi-directional communication pores ranges from 12% to 45%.

7. The porous glass with multi-directional communication pores of claim 4, wherein the weight percentage of the glass covering and bonding layer in the porous glass with multi-directional communication pores ranges from 55% to 88%.

8. The porous glass with multi-directional communication pores of claim 1, wherein the porosity of the porous glass is 65% to 75%.

9. The porous glass with multi-directional communication pores of claim 8, wherein the porosity is 70% to 75%.

10. The porous glass with multi-directional communication pores of any one of claims 1 to 9, wherein the pore size of the multi-directional communication pore is 70 to 80 micrometers, the average diameter of pore throats of communication channels between pores is 25 to 45 micrometers, and the pore throats are distributed in a range of 5 to 60 micrometers, wherein 50% or more of the pore throats are distributed in a range of 20 to 45 micrometers.

11. The porous glass with multi-directional communication pores of claim 10, wherein the average diameter of the pore throats is 28 to 36 micrometers, the pore throats are distributed in a range of 10 to 55 micrometers, and 90% or more of the pore throats are distributed in a range of 20 to 45 micrometers.

12. The porous glass material with uniform pore channels of claim 11, wherein the average diameter of the pore throats is about 29 to 35 micrometers, the pore throats are distributed in a range of 12 to 50 micrometers, and the percentage of the pore throats distributed in a range of 20 to 45 micrometers is higher than 95%.

13. The porous glass material with uniform pore channels of claim 12, wherein the pore throats are all distributed in a range of 20 to 45 micrometers.

14. An atomization core, comprising the porous glass with multi-directional communication pores of any one of claims 1 to 13 as a substrate, wherein a heating unit is provided on the substrate.

15. The atomization core of claim 14, wherein a temperature field deviation is less than 10°C during an atomization process.

16. An electronic atomizer, comprising the atomization core of claim 14 or 15.
